# EUROPEAN PATENT APPLICATION

(11) **EP 3 674 016 A1**
(43) Date of publication of application: **01.07.2020**
(21) Application number: 18848301.0
(22) Date of filing: 15.06.2018
(51) Int. Cl.: B22F 1/00, B22F 3/105, B22F 3/16

(54) **COPPER ALLOY POWDER FOR LAMINATION SHAPING, LAMINATION SHAPED PRODUCT PRODUCTION METHOD, AND LAMINATION SHAPED PRODUCT**

(30) Priority: 21.08.2017 JP 2017158942; 08.02.2018 JP 2018021320; 11.04.2018 WO PCT/JP2018/015281
(71) Applicant: JX Nippon Mining & Metals Corporation, Tokyo 100-8164 (JP)
(72) Inventor: SATO,Kenji, Tokyo 100-8164 (JP); SHIBUYA,Yoshitaka, Kitaibaraki-shi Ibaraki 319-1535 (JP)
(74) Representative: Mewburn Ellis LLP
(86) International application number: PCT/JP2018/023020
(87) International publication number: WO 2019/039058

(57) **Abstract**

An object of the present invention is to provide a copper alloy powder for lamination shaping comprising a copper alloy, a method for producing a lamination shaped product and a lamination shaped product, which can achieve coexistence of mechanical strength and conductivity. One aspect of the present invention relates to a copper alloy powder for lamination shaping, comprising at least one additive element having a solid solution amount to copper of less than 0.2 at%.

## Description

### TECHNICAL FIELD

The present invention relates to a copper alloy powder for lamination shaping, a method for producing a lamination shaped product, and a lamination shaped product. More particularly, it relates to a copper alloy powder for lamination shaping comprising a copper alloy, a method for producing a lamination shaped product and lamination shaped product, which that can achieve coexistence of mechanical strength and electrical conductivity.

### BACKGROUND ART

A 3D printer is also called additive manufacturing (AM). As a method for producing a metallic three-dimensional shaped product, a lamination method using an electron beam (EB) or a laser is well known. The method is carried out by forming a metal powder layer on a sintering table, irradiating a certain portion of the powder layer with a beam or a laser to sinter it, and then forming a new powder layer on the powder layer, irradiating a certain portion of the new powder layer with a beam to sinter it, thereby forming a sintered portion integrated with the underlying sintered portion. By repeating the processes, the above method can allow a three-dimensional shape to be formed by lamination of one layer by one layer from powder. The above method can allow formation of a complex shape which is otherwise difficult or impossible by the conventional processing method. By these methods, a desired three-dimensional model can be formed for a metallic material directly from shape data such as CAD (Non-Patent Document 1).

Lamination shaped products to be obtained by lamination shaping include those which require high electrical conductivity as well as high mechanical strength. Examples of the lamination shaped products include heat sinks, molds, welding torches, parts for power distribution equipment, and the like. However, the lamination method using an electron beam (EB) or a laser carries out shaping by rapidly heating copper alloy powder and rapidly cooling it, so that it is difficult to control a structure of the lamination shaped product, and when additive elements are contained, these elements form a solid solution, which causes decreased conductivity. On the other hand, when the additive elements are not contained, it will be difficult to obtain any required mechanical strength.

As an invention relating to achievement of coexistence of mechanical strength and conductivity, Patent Document 1 discloses a metal powder for lamination shaping, wherein the metal powder contains 0.10% by mass or more and 1.00% by mass or less of at least one of chromium and silicon, wherein the total amount of chromium and the silicon is 1.00% by mass or less, the balance being copper. According to the invention, an effect of capable of achieving coexistence of mechanical strength and conductivity is expected.

### CITATION LIST

### Patent Literature

Patent Document 1: Japanese Patent No. 6030186 B

### Non-Patent Literature

Non-Patent Document 1: "Special Issue 2 - 3D Printers; Attractive! Edition; "Design and Manufacturing Solution Exhibition" Report; Various Shaping Materials such as Resin, Paper and Metal", Nikkei Manufacturing, the August number, published by Nikkei BP (issue date: August 1, 2013), pp. 64-68

### SUMMARY OF INVENTION

### Technical Problem

However, Patent Document 1 does not present any specific means for solving the problem of solid solution of the additive elements. Actually, chromium results in easy solid solution in copper. Therefore, the problem that the addition of chromium to obtain mechanical strength results in decreased conductivity has still remained.

The present invention is made in view of the above problems. An object of the present invention is to provide a copper alloy powder for lamination shaping comprising a copper alloy, a method for producing a lamination shaped product and a lamination shaped product, which can achieve coexistence of mechanical strength and conductivity.

### Solution to Problem

As a result of intensive studies to solve the above technical problems, the present inventors have found that the use of an additive element having a small solid solution amount to copper can reduce solid solution, thereby solving a tradeoff between mechanical strength and conductivity. After further studies and considerations, the present inventors have completed the present invention.

Based on the above findings and results, the present invention provides the following inventions:
(1)
   A copper alloy powder for lamination shaping, comprising at least one additive element having a solid solution amount to copper of less than 0.2 at%.
(2)
   The copper alloy powder for lamination shaping according to (1), wherein the additive element is at least one selected from the group consisting of W, Zr, Nb, Nd, Y, Mo, Os or Ru.
(3)
   The copper alloy powder for lamination shaping according to (1) or (2), wherein the copper alloy powder contains the additive element in an amount of from 0.1 to 12.0 at%.
(4)
   The copper alloy powder for lamination shaping according to any one of (1) to (3), wherein the copper alloy powder has an average particle diameter D50 of from 20 to 100 µm.
(5)
   The copper alloy powder for lamination shaping to any one of (1) to (4), wherein the capper alloy powder has an oxygen concentration of 1000 wtppm or less.
(6)
   A method for producing a lamination shaped product using the copper alloy powder for lamination shaping according to any one of (1) to (5), the method comprising the steps of:
   spreading the copper alloy powder on a shaping stage to form a thin layer thereon; and irradiating a portion of the thin layer to be shaped with an electron beam to melt the copper alloy powder and then solidifying the molten copper alloy powder by natural cooling;
   wherein the steps are repeated several times to produce a lamination shaped product.
(7)
   A method for producing a lamination shaped product using the copper alloy powder for lamination shaping according to any one of (1) to (5), the method comprising the steps of:
   spreading the copper alloy powder on a shaping stage to form a thin layer thereon; and irradiating a portion of the thin layer to be shaped with a laser beam to melt the copper alloy powder and then solidifying the molten copper alloy powder by natural cooling; wherein the steps are repeated several times to produce a lamination shaped product.
(8)
   A lamination shaped product comprising a copper alloy, wherein the copper alloy contains at least one additive element having a solid solution amount of less than 0.2 at%, and the copper alloy has a relative density of 98% or more relative to theoretical density; a conductivity of 50% IACS or more, and a 0.2% yield strength of 700 MPa or more.
(9)
   The lamination shaped product according to (8), wherein the additive element is at least one selected from the group consisting of W, Zr, Nb, Nd, Y, Mo, Os or Ru.
(10)
   The lamination shaped product according to (8) or (9), wherein the copper alloy powder contains the additive element in an amount of from 0.1 to 12.0 at%.

### Advantageous Effects of Invention

According to the present invention it is possible to provide a copper alloy powder for lamination shaping comprising a copper alloy, a method for producing a lamination shaped product and a lamination shaped product, which can achieve coexistence of mechanical strength and conductivity.

### DESCRIPTION OF THE PREFERRED EMBODIMENTS

### (Copper Alloy Powder)

A copper alloy powder that can be used for the present invention can be produced by a known method. If a particle diameter is several microns or more, a copper alloy powder is generally used which is produced by a dry method represented by an atomization method that is excellent in production costs in view of industries, but a copper alloy powder may be used which is produced by a wet method such as a reduction method. More particularly, the copper alloy powder is produced by bringing alloy components with a high pressure gas or high pressure water while dropping the alloy components in a molten state from a bottom of a tundish, and rapidly cooling and solidifying the alloy components to form powder of the alloy components. In addition to the method, the metal powder may be produced by, for example, a plasma atomization method, a centrifugal force atomization method, or the like. By using the metal powder obtained by these production methods, a dense lamination shaped product tends to be obtained.

The copper alloy powder contains at least one additive element having a solid solution amount to copper of less than 0.2 at%. The additive element contained can provide a lamination shaped product having higher mechanical strength that that of pure copper. Further, the solid solution amount to copper of less than 0.2 at% can allow suppression of formation of a phase where the additive element results in solid solution in copper, even if rapid heating and rapid cooling are carried out during shaping, so that higher conductivity can be obtained.

The solid solution amount to copper is an inherent property of the additive element, and can be extracted from a diagram showing a relationship of phases relative to temperatures of two elements, which diagram is generally referred to as a phase diagram. For example, the solid solution amount is considered with reference to Phase Diagrams for Binary Alloys (ISBN: 0-87170-682-2) published by ASM International. Referring to a solid solution amount on a Cu side from the phase diagram, target elements each having a maximum solid solution amount of 0.2 at% or less at a liquid phase temperature or less are determined. More particularly, the target elements are Ba, Bi, Ca, Gd, Eu, Ho, La, Lu, Mo, Nd, Nb, Os, Pb, Pm, Pu, Re, Ru, S, Se, Sr, Sm, Tb, Tc , Te, Th, Tm, U, V, W, Y, Yb, and Zr.

Moreover, only one of these elements may be add, or two or more of these elements may be added.

Further, in terms of achieving coexistence of mechanical strength and conductivity, the additive element is preferably at least one selected from the group consisting of W, Zr, Nb, Nd, Y, Mo, Os or Ru. Each of these additive elements has a solid solution amount to copper of less than 0.2 at% and is easily precipitated, so that the mechanical strength of the lamination shaped product can be significantly improved.

Further, the content of the additive element is preferably from 0.1 to 12.0 at%. The content of the additive element of 0.1 at% or more further improves the mechanical strength, and the content of the additive element of 12.0 at% or less can prevent an unwanted decrease in the conductivity.

When two or more additive elements are added, the total amount of the elements may be from 0.1 to 12.0 at%.

The content of the additive element can be measured, for example, by ICP-OES (high frequency inductive coupling plasma emission spectrometry) sold under the name of SPS3500 DD from Seiko Instruments Inc.

An average particle diameter D50 of the copper alloy powder is preferably from 20 to 100 µm. The average particle diameter D50 of 20 µm or more can allow prevention of the powder from scattering during shaping, and easy handling of the powder. Further, the average particle diameter D50 of 100 µm or less can allow production of a lamination shaped product having higher fineness. Further, the average particle diameter D50 of from 20 to 100 µm can allow prevention of unshaped copper alloy powder from being mixed into the lamination shaped product.

The average particle diameter D50 refers to a particle diameter at an integrated value of 50% in a distribution of a particle diameter which is regarded as a diameter of a circle corresponding to an area calculated from images of particles obtained by microscopic image analysis.

For example, the average particle diameter can be measured by a dry particle image analyzer Morphologi G3 from Spectris Inc. (Malvern Division).

An oxygen concentration in the copper alloy powder is preferably 1000 wtppm or less, and more preferably 500 wtppm or less, and even more preferably 250 wtppm or less. This is because the lower amount of oxygen in the copper alloy powder can prevent the shaped product from being formed in a state where oxygen is contained in the shaped product, whereby any possibility of adversely affecting the conductivity of the shaped product can be reduced. In order to achieve the oxygen concentration, the use of disk atomization is preferred. With gas atomization, it is highly likely that oxygen contained in the gas used for atomization is contained in the shaped product, and the oxygen concentration often exceeds 300 wtppm.

The oxygen concentration can be measured by an inert gas fusion method with TCO600 from LECO.

The copper alloy powder may contain unavoidable impurities other than the above additive elements and copper. The copper alloy powder may contain impurities as long as properties required for the copper alloy powder are not affected. In this case, it is preferable that the concentration of the unavoidable impurities except for the gas component is 0.01% by mass or less, from the viewpoint that the copper alloy powder can be efficiently melted and bonded.

### (Production Method of Lamination Shaped Product)

A production method is not particularly limited as long as the method uses the copper alloy powder according to the present invention. Here, as a most typical method, the lamination shaped product can be produced by forming a thin layer of the copper alloy powder according to the present invention, solidifying the copper alloy powder in the thin layer by sintering or fusion bonding with an electron beam or a laser beam to form a shaped product layer, and laminating the shaped product layer.

Preferably, the lamination shaped product can be produced by repeating steps several times, the steps being spreading the copper alloy powder on a shaping stage to form a thin layer thereon; and irradiating a portion of the thin layer to be shaped with an electron beam to melt the copper alloy powder and then solidifying the molten copper alloy powder by natural cooling.

In another embodiment, the lamination shaped product can be produced by repeating steps several times, the steps being spreading the copper alloy powder on a shaping stage to form a thin layer thereon; and irradiating a portion of the thin layer to be shaped with a laser beam to melt the copper alloy powder and then solidifying the molten copper alloy powder by natural cooling. The laser beam can be appropriately selected depending on facility environments, required product performances, and the like, as long as it can melt the copper alloy powder. For example, a fiber laser with a wavelength of about 1060 nm or a blue laser with a wavelength of about 450 nm can be selected.

### (Lamination Shaped Product)

The lamination shaped product produced by the production method according to the present invention has improved mechanical strength and conductivity. More particularly, it is possible to obtain properties where a relative density to theoretical density is 98% or more, a conductivity is 50% IACS or more, and a 0.2% yield strength is 700 MPa or more. From this point of view, the relative density is more preferably 99% or more, and more preferably 99.5% or more.

The lamination shaped product according to the present invention has a relative density to theoretical density of 98% or more. The relative density to the theoretical density of 98% or more can allow the lamination shaped product according to the present invention to be used even in a situation where the mechanical strength is highly required.

In the present invention, the density of the lamination shaped product is represented by relative density. The relative density is represented by the equation: relative density = (measured density / theoretical density) × 100 (%), based on the measured density and the theoretical density. The theoretical density is a value of density calculated from theoretical density of each element in each component of the lamination shaped product. For example, if 5.0% by mass of W (tungsten) is contained, then a mass ratio of constituent elements Cu and W of Cu:W = 95:5 is used to calculate the theoretical density. In this case, the theoretical density is calculated by the equation: (Cu density (g/cm³) × 95 + W density (g/cm³) × 5) / 100 (g/cm³). The theoretical density of W is calculated as 19.25 g/cm³, the theoretical density of Cu is calculated as 8.94 g/cm³, whereby the theoretical density is calculated to be 9.455 (g/cm³).

It should be noted that although a measurement result in at% is obtained depending on analyzing apparatuses, the theoretical density can be calculated by converting the unit into % by mass.

On the other hand, the measured density of the lamination shaped product can be measured, for example, by an Archimedes method. The measurement of the density by the Archimedes method can be carried out according to "JIS Z 2501: Test Method for Sintered Metal Material-Density, Oil Content and Open Porosity". Water may be used as a liquid.

The lamination shaped product according to the present invention has a conductivity of 50% IACS or more. The conductivity of 50% IACS or more can allow the lamination shaped product according to the present invention to be used even in a situation where the conductivity is highly required. From this viewpoint, the conductivity is more preferably 70% IACS or more, and even more preferably 90% IACS or more.

The conductivity can be measured by a commercially available vortex type conductivity meter. It should be noted that IACS (International Annealed Copper Standard) is a standard of electric resistance (or electric conductivity), which defines a conductivity of annealed standard soft copper (volume resistivity: 1.7241 × 10⁻² µΩm) internationally adopted as 100% IACS.

The lamination shaped product according to the present invention has a 0.2% yield strength of 700 MPa or more. The 0.2% yield strength of 700 MPa or more can allow the lamination shaped product according to the present invention to be used even in a situation where the mechanical strength is highly required.

The 0.2% laminations shaped product is measured according to JIS Z2241 using a tensile tester.

### EXAMPLES

Hereinafter, the present invention will be specifically described based on Examples and Comparative Examples. The descriptions of the following Examples and Comparative Examples are merely for better understanding of the present invention, and the scope of the present invention is not limited by these Examples.

### (Preparation of Examples 1 to 45 and Comparative Examples 1 to 5)

### [Composition]

The composition of the elements contained in the copper alloy powder as a raw material for each lamination shaped product was measured by ICP-OES (high frequency inductive coupling plasma emission spectrometry) sold under the name of SPS3500 DD from Seiko Instruments Inc.

It should be noted that the balance not shown in the table below is copper and unavoidable impurities.

### [Lamination Shaped Product]

The lamination shaped products of Examples 1 to 45 and Comparative Examples 1 to 5 were produced using the copper alloy powders shown in Table 1, respectively. All of these copper alloy powders were produced by the disk atomization method.

Each lamination shaped product was produced by forming each copper alloy powder into a thin layer, irradiating it with an electron beam or a laser beam to solidify the copper alloy powder to form a shaped product layer, and laminating the shaped product layer. Further, in order to facilitate evaluation, the shaped product was a plate-shaped test piece having W80 × L100 × H35.

### (Evaluation of Examples 1 to 45 and Comparative Examples 1 to 5)

### [Oxygen Concentration]

The oxygen concentration was measured by an inert gas fusion method with TCO600 from LECO.

### [Average Particle Diameter D50]

The average particle diameter D50 (volume basis) was measured by the following apparatus and conditions:
- Manufacturer: Spectris Inc. (Malvern Division);
- Apparatus Name: dry particle image analyzer Morphologi G3;
- Measurement Conditions:
   Amount of Particle Introduced: 11 mm³;
   Injection Pressure: 0.8 bar;
   Measuring Particle Diameter Range: 3.5-210 µm; and
   Number of Particles Measured: 20000.

### [Relative Density]

A 20 mm square sample is cut out from each shaped product, and the measured density was calculated by the Archimedes method. The apparent density was divided by the theoretical density (8.93 g/cm³) and multiplied by 100 to define the relative density (%).

### [Conductivity]

A 20 mm square sample was cut out from each shaped product, and the conductivity was evaluated with a commercially available vortex type conductivity meter.

### [0.2% Yield Strength]

The respective test pieces were subjected to a tensile test in each of directions parallel to rolling and perpendicular to rolling based on JIS Z2241 to measure 0.2% yield strengths (YS: MPa), and a difference between their 0.2% yield strengths was calculated.

**[Table 1-1]**

| | Additive Element in Powder | | Powder | | Lam ination Shaped Product | | | | |
|---|---|---|---|---|---|---|---|---|---|
| | Type | Solid Solution Am ourt to Copper(at%) | Content (at%) | Particle Diam eter D50 (µm) | Shaping Method | Relative Density (%) | Conductivity (% IACS) | 0.2% Yield Strength (MPa) | Oxygen Concentration [wtppm] |
| Example 1 | W | <0.01 | 0.9 | 25.7 | Electron Beam | 98.3 | 70.2 | 715 | 710 |
| Example 2 | Zr | 0.12 | 0.9 | 26.8 | Electron Beam | 98.4 | 63.4 | 710 | 730 |
| Examples 3 | Nb | 0.1 | 0.9 | 26.7 | E lectron Beam | 98.2 | 64.5 | 725 | 670 |
| Example 4 | Nd | <0.01 | 0.9 | 24.8 | Electron Beam | 98.1 | 72.2 | 710 | 650 |
| Example 5 | Y | <0.01 | 0.9 | 26.9 | Electron Beam | 98.2 | 73.5 | 715 | 630 |
| Exam ple 6 | W | <0.01 | 5.5 | 25.4 | Electron Beam | 98.5 | 63.5 | 815 | 630 |
| Example 7 | Zr | 0.12 | 5.7 | 28.5 | E lectron Beam | 98.4 | 61.3 | 630 | 620 |
| Example 8 | Nb | 0.1 | 5.8 | 242 | Electron Beam | 98.2 | 59.4 | 840 | 610 |
| Example 9 | Nd | <0.01 | 5.7 | 235 | Electron Beam | 98.4 | 62.2 | 850 | 620 |
| Example 10 | Y | <0.01 | 4.5 | 245 | Electron Beam | 98.6 | 57.4 | 840 | 640 |
| Exam ple 11 | W | <0.01 | 10.5 | 265 | Electron Beam | 98.5 | 60.3 | 915 | 650 |
| Example 12 | Zr | 0.12 | 11.2 | 248 | Electron Beam | 98.4 | 60.8 | 920 | 680 |
| Example 13 | Nb | 0.1 | 9.8 | 272 | Electron Beam | 98.3 | 60.5 | 880 | 620 |
| Example 14 | Nd | <0.01 | 9.7 | 236 | Electron Beam | 98.5 | 61.2 | 890 | 680 |
| Exam ple 15 | Y | <0.01 | 10.7 | 24B | E lectron Beam | 98.4 | 63.4 | 930 | 620 |
| Example 16 | W | <0.01 | 0.9 | 502 | E lectron Beam | 98.3 | 70 | 710 | 680 |
| Example 17 | Zr | 0.12 | 0.9 | 512 | E lectron Beam | 98.4 | 65.4 | 705 | 670 |
| Example 18 | W | <0.01 | 0.9 | 802 | E lectron Beam | 98.5 | 69.4 | 700 | 690 |
| Exam ple 19 | Zr | 0.12 | 0.9 | 805 | Electron Beam | 98.5 | 58.4 | 705 | 650 |
| Example 20 | W | <0.01 | 0.9 | 25.7 | E lectron Beam | 99.2 | 80.3 | 770 | 640 |
| Example 21 | Zr | 0.12 | 0.9 | 26.8 | E lectron Beam | 99.3 | 71.5 | 760 | 630 |
| Example 22 | W | <0.01 | 0.9 | 25.7 | Electron Beam | 99.7 | 78.2 | 850 | 650 |
| Example 23 | Zr | 0.12 | 0.9 | 26B | E lectron Beam | 99.8 | 75.5 | 850 | 600 |
| Example 24 | W | <0.01 | 0.9 | 25.7 | E lectron Beam | 98.3 | 83.3 | 730 | 450 |
| Example 25 | W | <0.01 | 0.9 | 25.7 | E lectron Beam | 98.3 | 91.5 | 750 | 210 |

**[Table 1-2]**

| | Addtive elemert in Povuder | | Powder | | Lamination Shaped Product | | | | |
|---|---|---|---|---|---|---|---|---|---|
| | Type | Solid Solution Amount to Copper (at%) | Cortent (at%) | Partide Diameter D50(µm) | Shaping Method | Relative Density (%) | Conductivity (%IACS) | 0,2% Yield Strength (MPa) | Oxygen Concentration [vitppm] |
| Example 26 | W Zr | 0.12 | W0.5 Zr0.5 | 25.6 | Electron Beam | 98.2 | 61.2 | 720 | 730 |
| Example 27 | ZrNb | 0.11 | Zr0.5 Nn0.5 | 26.3 | Electron Beam | 98.3 | 61.5 | 715 | 700 |
| Example 28 | NdY | <0.01 | Nd0.5 Y0.5 | 26.3 | Electron Beam | 98.3 | 70.2 | 730 | 710 |
| Example 29 | WNb | 0.05 | W0.5Nb0.5 | 27.5 | Electron Beam | 98.4 | 65.5 | 725 | 725 |
| Example 30 | W Nd | <0.01 | W0.5Nb0.5 | 28.5 | Electron Beam | 95.4 | 60.2 | 715 | 710 |
| Example 31 | W Y | <0.01 | W0.5 Y0.5 | 23.4 | Electron Beam | 96.2 | 61.8 | 750 | 730 |
| Example 32 | W | <0.01 | 0.9 | 25.7 | Electron Beam | 99.8 | 92.8 | 780 | 200 |
| Example 33 | Zr | 0.12 | 0.9 | 26.5 | Electron Beam | 99.8 | 90.5 | 770 | 210 |
| Example 34 | W | <0.01 | 0.4 | 24.6 | Electron Beam | 99.7 | 94.5 | 750 | 190 |
| Example 35 | Zr | 0.12 | 0.4 | 24.5 | Electron Beam | 99.8 | 92.5 | 745 | 220 |
| Example 36 | W | <0.01 | 0.9 | 26.7 | Electron Beam | 98.1 | 53.8 | 700 | 1200 |
| Example 37 | Mo | 0.06 | 0.9 | 23.6 | Electron Beam | 98.5 | 70.2 | 720 | 710 |
| Example 38 | Os | <0.01 | 0.9 | 27.6 | Electron Beam | 98.4 | 63.4 | 715 | 730 |
| Example 39 | Ru | <0.01 | 0.9 | 29.4 | Electron Beam | 98.5 | 63.4 | 730 | 650 |
| Example 40 | W | <0.01 | 0.9 | 26.8 | Laser (Fiber Laser, wavelength of about 1060 nm) | 98.5 | 73.2 | 730 | 1020 |
| Example 41 | W | <0.01 | 0.9 | 27.8 | Laser (Blue Laser, wavelength of about 450 nm) | 99.2 | 80.2 | 720 | 1050 |
| Example 42 | Nd | <0.01 | 0.9 | 26.7 | Laser (Fiber Laser, wavelength of about 1060 nm) | 98.7 | 75.2 | 720 | 970 |
| Example 43 | Nd | <0.01 | 0.9 | 25.5 | Laser (Blue Lassr, wavelength of about 450 nm) | 99.4 | 83.5 | 730 | 980 |
| Example 44 | Y | <0.01 | 0.9 | 27.8 | Laser (Fiber Laser, wavelength of about 1060 nm) | 98.6 | 74.1 | 740 | 970 |
| Example 45 | Y | <0.01 | 0.9 | 25.8 | Laser (Blue Laser, wavelength of about 450 nm) | 99.3 | 84.2 | 720 | 960 |
| Comparative Example 1 | Cr | 0.2 | 0.2 | 25.1 | Electron Beam | 98.2 | 57.3 | 330 | 670 |
| Comparative Example 2 | Cr | 0.2 | 0.9 | 27.3 | Electron Beam | 98.3 | 24 | 450 | 650 |
| Comparative Example 3 | Si | 11.15 | 0.9 | 25.7 | Electron Beam | 98.4 | 28 | 300 | 620 |
| Comparative Example 4 | Al | 2.48 | 0.9 | 28.5 | Electron Beam | 99.4 | 77.4 | 320 | 210 |
| Comparative Example 5 | -(PureCu) | - | - | 25.8 | Electron Beam | 98.3 | 95.6 | 600 | 670 |

According to Examples 1 to 45, it is understood that the addition of the additive element having a solid solution amount to copper of less than 0.2 at% can provide high conductivity while enhancing the mechanical strength of the lamination shaped product. However, in Comparative Examples 1 and 2, chromium having a solid solution amount to copper of 0.2 at% is contained, so coexistence of mechanical strength and conductivity could not be achieved.

In Comparative Example 3, silicon having a solid solution amount to copper of 0.2 at% or more is contained, which is a lower content. However, all silicon results in solid solution in copper. Therefore, coexistence of mechanical strength and conductivity could not be achieved.

In Comparative Example 4, aluminum having a solid solution amount to copper of 0.2 at% or more is contained, which is a lower content. However, all aluminum results in solid solution in copper. Therefore, coexistence of mechanical strength and conductivity could not be achieved.

Comparative Example 5 carried out the shaping of the pure copper powder, so that sufficient mechanical strength could not be obtained.

### INDUSTRIAL APPLICABILITY

According to the present invention, it is possible to provide a copper alloy powder for lamination shaping comprising a copper alloy, a method for producing a lamination shaped product and a lamination shaped product, which can achieve coexistence of mechanical strength and conductivity. Therefore, when they are used for 3D printers, coexistence of mechanical strength and conductivity can be achieved.

## Claims

1. A copper alloy powder for lamination shaping, comprising at least one additive element having a solid solution amount to copper of less than 0.2 at%.

2. The copper alloy powder for lamination shaping according to claim 1, wherein the additive element is at least one selected from the group consisting of W, Zr, Nb, Nd, Y, Mo, Os or Ru.

3. The copper alloy powder for lamination shaping according to claim 1 or 2, wherein the copper alloy powder contains the additive element in an amount of from 0.1 to 12.0 at%.

4. The copper alloy powder for lamination shaping according to any one of claims 1 to 3, wherein the copper alloy powder has an average particle diameter D50 of from 20 to 100 µm.

5. The copper alloy powder for lamination shaping to any one of claims 1 to 4, wherein the capper alloy powder has an oxygen concentration of 1000 wtppm or less.

6. A method for producing a lamination shaped product using the copper alloy powder for lamination shaping according to any one of claims 1 to 5, the method comprising the steps of:
spreading the copper alloy powder on a shaping stage to form a thin layer thereon; and
irradiating a portion of the thin layer to be shaped with an electron beam to melt the copper alloy powder and then solidifying the molten copper alloy powder by natural cooling;
wherein the steps are repeated several times to produce a lamination shaped product.

7. A method for producing a lamination shaped product using the copper alloy powder for lamination shaping according to any one of claims 1 to 5, the method comprising the steps of:
spreading the copper alloy powder on a shaping stage to form a thin layer thereon; and
irradiating a portion of the thin layer to be shaped with a laser beam to melt the copper alloy powder and then solidifying the molten copper alloy powder by natural cooling;
wherein the steps are repeated several times to produce a lamination shaped product.

8. A lamination shaped product comprising a copper alloy,
wherein the copper alloy contains at least one additive element having a solid solution amount of less than 0.2 at%, and the copper alloy has a relative density of 98% or more relative to theoretical density; a conductivity of 50% IACS or more, and a 0.2% yield strength of 700 MPa or more.

9. The lamination shaped product according to claim 8, wherein the additive element is at least one selected from the group consisting of W, Zr, Nb, Nd, Y, Mo, Os or Ru.

10. The lamination shaped product according to claim 8 or 9, wherein the copper alloy powder contains the additive element in an amount of from 0.1 to 12.0 at%.
